# EUROPEAN PATENT APPLICATION

(11) **EP 1 091 566 A2**
(43) Date of publication of application: **11.04.2001**
(21) Application number: 00203318.1
(22) Date of filing: 25.09.2000
(51) Int. Cl.: H04N 1/60

(54) **Output adjustment for digital printers**

(30) Priority: 05.10.1999 US 412899
(71) Applicant: EASTMAN KODAK COMPANY, Rochester, New York 14650 (US)
(72) Inventor: Kelly, Anthony Michael, Rochester, New York 14650-2201 (US); Gilman, Paul B., Rochester, New York 14650-2201 (US); Parulski, Kenneth Alan, Rochester, New York 14650-2201 (US); Collette, Robert Patrick, Rochester, New York 14650-2201 (US)
(74) Representative: Lewandowsky, Klaus, Dipl.-Ing.

(57) **Abstract**

A method for providing information usable for adjusting the output of a digital printer, includes the steps of providing a plurality of known code values to the digital printer which produces a test print including a plurality of test patches of density; and providing a plurality of reference patches each having an aim density. The method further includes scanning both the test patches and the reference patches to produce code values of both the test patches and the reference patches; and comparing the code values of the scanned test patches and the reference patches to determine the correspondence between the test patches and the reference patches and to provide information adapted to be used for digital printer output adjustment.

## Description

This invention relates to adjusting a digital printer prior to producing prints from a digital image.

Digital images are often produced by electronic still cameras. These cameras include an image sensor, an analog to digital converter, and a storage device for storing the digital image files. There are many storage devices on which these digital images can be stored, including floppy magnetic discs, hard magnetic disc drives, and solid state memory (for example flash memory) cards. The stored images may later be downloaded to a host computer and printed using a local printer, such as a color inkjet printer.

In another approach to providing digital colored images, a photographic film is scanned, digitized and converted to a file for each image. The Kodak Picture CD™ system is an example of one such arrangement for scanning, digitizing, and providing a digital file for each image. The CD disk that stores the digital images may also include software programs or applications which will operate on these image files. These applications permit the customer to access, view, modify, and/or print the image files as desired. Adobe Photodeluxe™ 2.0 and Adobe PhotoShop™ 4.0 are examples of software that can operate on digital image files to drive a printer for producing output images.

A problem with many home printing arrangements is that they often require significant operator adjustments in order to provide acceptable quality color images. One reason for this is that there are a number of different printers and papers that can be used, each having different characteristics that can affect the tone reproduction of the printed image. High quality printers typically have a pull down or displayed menu which permits a user to select a particular type of printer transform to produce a print. For example, when Adobe Photoshop software is used to drive an Epson Stylus Photo Ink Jet Printer, the Epson printer has a number of user selectable modes such as Photo, Photoenhance, Graph, Text, and Advanced Photo. The mode selection can be used by skilled users to provide improved printing of continuous tone images from digital files. However, the modes do not provide the best possible prints, since they do not take into account the print paper that is used, or the individual characteristics of a particular printer or replaceable print head, which may exhibit slight differences even among printers or print heads having the same model number, due to manufacturing tolerances.

The output characteristic curve of a predetermined printer / medium combination can be determined as described in commonly-assigned US-A-5,913,014. However, techniques described in US-A-5,913,014 require a densitometer in order to measure the densities of the uniform reference patches on a test print produced using the printer / medium combination. Densitometers are specialized scientific instruments that are unavailable to the vast majority of home and business users. In addition, densitometers are difficult to use without special training. Commonly-assigned US-A-5,081,529 describes an alternate system for calibrating a printer using an interactive monitor display. Unfortunately, this system requires the user to make a visual comparison between a monitor and a hard copy print, which is difficult for untrained users to do, and therefore often results in printer calibration errors.

Color flatbed or sheet feed scanners are, however, often part of computer systems used for digital imaging by home and business users. However, these scanners are very different than densitometers, and are not normally calibrated in a way that allows the density of a scanned print to be accurately determined. What is needed is a method for adjusting the output of a digital printer that does not utilize a densitometer or require subjective judgements by the user.

It is an object of the present invention to provide a way to simply and easily adjust a digital printer such as a home printer, without using special instruments such as a densitometer, in order to produce improved prints.

It is another object of the present invention to provide an effective way of producing high quality digital prints from digital images.

Another object of this invention is to provide a simple method for adjusting a continuous tone printer using a scanner to scan both a test object and a calibration print made using the printer to be adjusted.

These objects are achieved in a method for providing information usable for adjusting the output of a digital printer, comprising the steps of:
(a) providing a plurality of known code values to the digital printer which produces a test print including a plurality of test patches of density;
(b) providing a plurality of reference patches each having an aim density;
(c) scanning both the test patches and the reference patches to produce code values of both the test patches and the reference patches; and
(d) comparing the code values of the scanned test patches and the reference patches to determine the correspondence between the test patches and the reference patches and to provide information adapted to be used for digital printer output adjustment.

The present invention permits printers to provide high quality prints on different types of media, without requiring the user to make manual printer adjustments based on subjective visual judgements.

The present invention permits a printer to produce high quality prints using a simple calibration process that makes use of known reference patches.

The present invention eliminates the use of an expensive densitometer by using known reference patches and a low cost color reflection scanner to provide a calibration process that requires little user knowledge and no special instrumentation.

The present invention permits the production of prints on a variety of print media having defined aim densities, while reducing variations in print quality due to printer or media variability
FIG. 1 illustrates a system that can be used for adjusting a printer;
FIG. 2 is a flow chart of a method for adjusting a continuous tone printer;
FIG. 3 illustrates an example test print produced by the printer during the process of FIG. 2;
FIG. 4 depicts a printer correction curveshape determined using the process of FIG. 2; and
FIG. 5 depicts a set of separate RGB printer correction curveshapes determined using the process of FIG. 2.

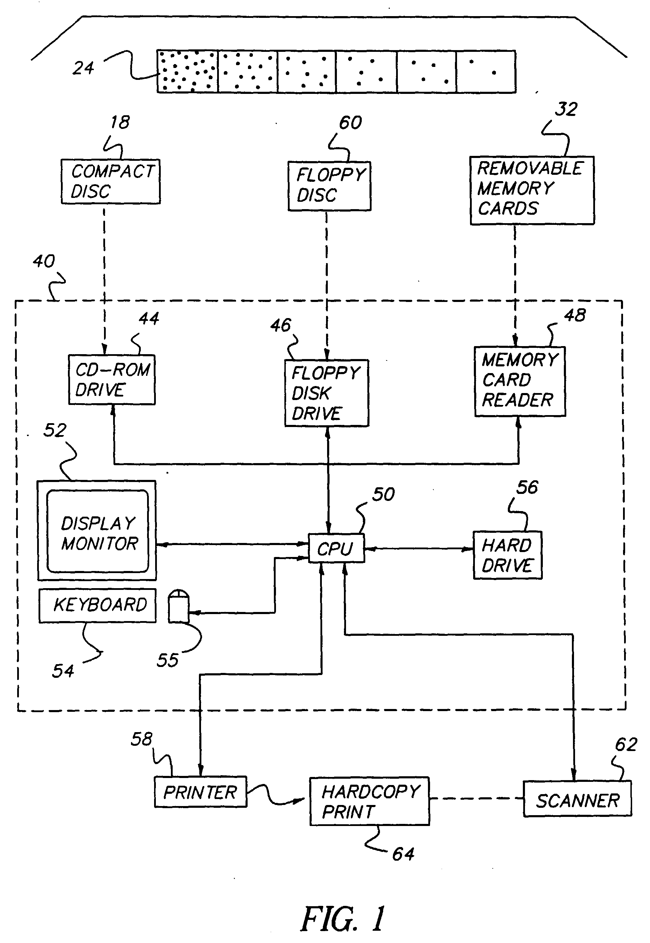

FIG. 1 illustrates a system which can be used for adjusting the user's hardcopy printer 58 attached to their home computer 40 using the software contained on compact disc 18 or other media. The compact disc 18, containing the software that implements the method described in this invention, is inserted into a well-known CD-ROM drive 44 in a host computer 40. Alternatively, the software can be stored on a floppy magnetic disc 60. This floppy disc 60 is inserted into a floppy disc drive 46. Alternately, the software can also be provided on a removable memory card. The removable memory card 32, which can be flash EPROM memory, can be inserted into a memory card reader 48. The compact disc 18, floppy disc 60, or removable memory card 32, or an alternate type of digital storage media, is supplied to the user with a reference strip 24 which is used in the process of adjusting the user's hardcopy printer to provide improved prints. The compact disc 18 may also contain digitized images, for example it may be a Kodak Picture CD disc.

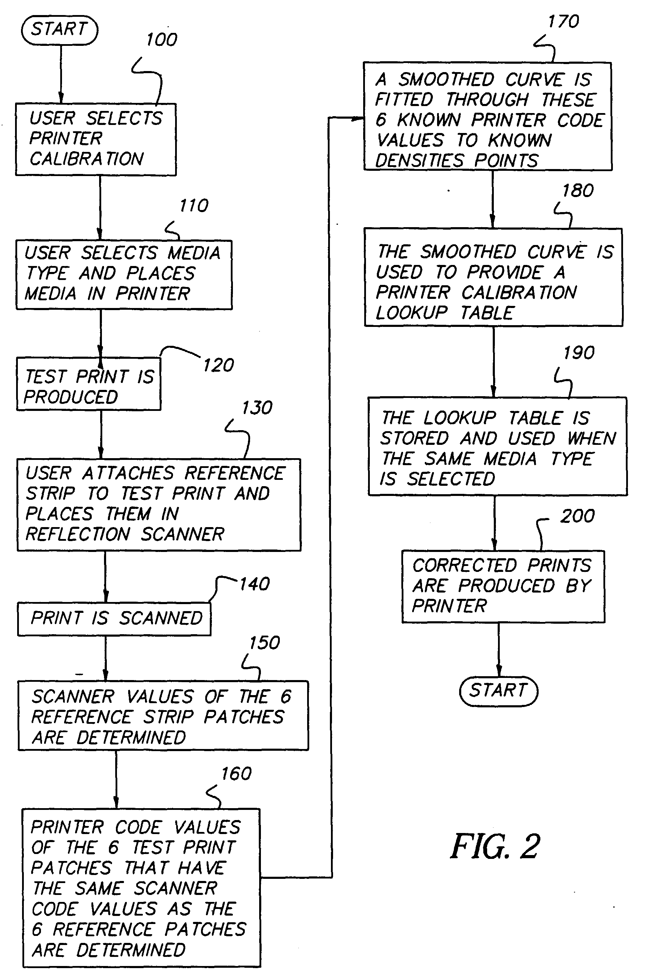

A CPU 50 will be understood to use software in accordance with the present invention that will be described in more detail in reference to FIG. 2. This software can be downloaded from the compact disc 18, floppy disc 60, or removable memory card 32 and installed and stored on a hard drive 56. The CPU 50 is coupled to a display monitor 52 and a keyboard 54. A mouse 55 permits the user to readily communicate with the CPU 50. The CPU 50 communicates with a local color printer 58 that produces a hard copy print 64. The CPU 50 also communicates with a color reflection scanner 62 which can be used to scan a hardcopy print 64 produced by the printer 58, and which provides the CPU 50 with the digital pixel values produced when a print 64 is scanned. Both the printer 58 and the scanner 62 may be connected to the CPU 50 via one of several different well-known interfaces, such as a SCSI, RS-232 serial or USB interface.

Turning now to FIG. 2 which depicts a block diagram of a process in accordance with the present invention. In step 100, the user selects printer calibration (for example by selecting a printer calibration icon displayed as part of the graphic user interface on display monitor 52), and the software application asks the user to select the type of media to be used (for example Kodak Inkjet Photo Paper, Kodak Inkjet Photo Stickers, and so forth). In step 110, the user selects the media type to be used in their home printer, using either a pull-down menu or entering text if the media they plan to use is not listed.

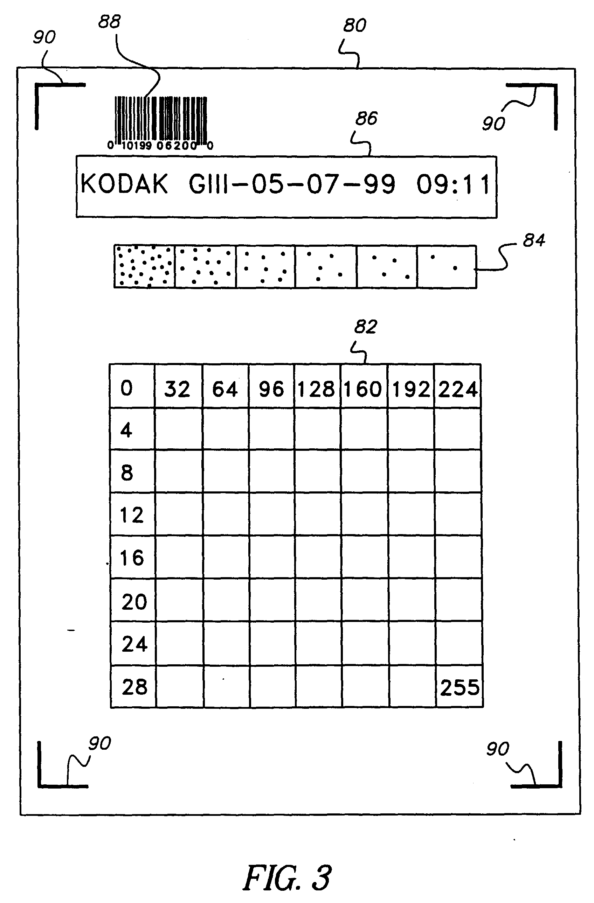

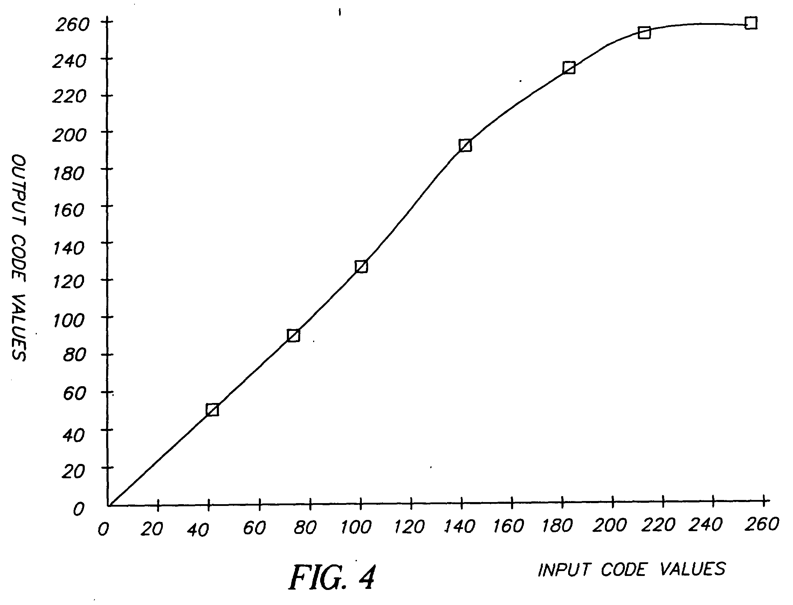

In step 120, a print 64, for example the test print 80 shown in Fig. 3, is produced by printer 50. The test print 80 can include an area 82 having an array of 8 x 8 test patches from dark to light, having code values from 0 to 255. Alternately, the test print could have a 16 x 16 array of code values from 0 to 255, or some other number of patches. The test print 80 also includes an area 84 for placing the reference strip 24 shown in Fig. 4. The reference strip 24 includes a number of reference patches having known aim reference densities. The number of reference patches (for example 6 reference patches) in reference strip 24 is much less than the number of test patches (for example 64 test patches) in area 82 of test print 80. The aim density is the desired density of the reference patch. Due to manufacturing variability, the exact density of the reference patch may be slightly different than the aim density. For example, the reference strip can have 6 patches with the following densities:

| Patch number | Aim Density |
|---|---|
| 1 | 0.080 |
| 2 | 0.180 |
| 3 | 0.300 |
| 4 | 0.650 |
| 5 | 1.105 |
| 6 | 1.700 |

The reference strip 24 preferably includes "post-it note" type adhesive on the back so that it can be removably attached to the test print 80. The test print 80 further includes an identifier 86, which includes text identifying the print media and the date and time the test print was produced. The test print 80 also includes a bar code 88 with a reference to a file number identifier containing the print media type selected and the date and time the test print was produced. This file is produced by CPU 50 at the time the test print is produced, and is stored on hard drive 56. The test print 80 further includes alignment features 90 at the four edges of the print. These alignment features 90 can later be used to automatically locate the other areas of the test print 80 within the digital image, after the test print 80 is scanned by scanner 62.

After the test print 80 is produced by the printer 58, in step 130 the user attaches the reference strip 24, and places the test print 80 with the attached reference strip 24 atop the flat bed of the reflection scanner 62, which may, for example, be a Microtek ScanMaker E6 scanner. In step 140, the print is scanned in order to produce scanner code values for each of the patches of the test print 80 and the reference strip 24. Alternately, it is possible to scan the reference strip 24 and the test print 80 as two separate operations. However, this can cause errors if the scanner automatically adjusts the scanning exposure or tone scale parameters, which could then be different for the two scans. The present invention uses the correspondence between the scanned code values of the patches 82 on the test print 80 and the scanned code values of the patches on the reference print 84 to provide the information used to adjust the output of the digital printer 58.

The identifier 86, which includes text identifying the print media and the date and time the test print was produced, can be read by the user prior to scanning, to ensure that the print being scanned is the proper one that was just produced by the printer, rather than an earlier print, possibly on a different media, that may have been mistakenly selected by the user. In addition, the bar code 88 can interpreted by a well-known computer algorithm to determine the file name, and the information in the file can be checked to ensure that the print scanned is the proper one that was just produced by the printer, rather than an earlier print, possibly on a different media, that may have been mistakenly selected by the user.

In step 150, the average luminance (for example monochrome mode) scanner values for each of the reference strip patches are determined by averaging the digital code values from the central portion of each of the reference patches on reference strip 24, from area 84 of test print 80. The location of the patches within area 84 may be determined by first locating the positions of the alignment features 90 at the four edges of the print, using well-known alignment algorithms. In step 160, the printer code values needed to produce the same scanner code values as those from each patch on the reference strip 24 are determined, by using the average scanner code values from the patches in the reference print area 82. These printer code values are the values needed to produce a print with the same density as the patches of reference strip 24. The printer code values are determined by the following steps:
(1) Selecting which two reference patches in area 82 provide average scanner code values closest to (for example just greater than and just less than) the average scanner code value for the first reference patch in test strip 24;
(2) Linearly interpolate between these two selected scanner code values to determine the printer code value needed to produce the a print density providing the same scanner code value as the first reference patch; and
(3) Repeating steps 1 and 2 for each of the remaining patches on the test strip.

For example, if the average scanner code value from reference patch 4 (0.650 density patch) was code value 148, and the two closest reference patches were the printer code value 128 patch, which produced an average scanner code value of 147 and the code value 132 patch, which produced an average scanner code value of 151, the printer code value of 129 is the linearly interpolated printer code value that would be used to produce a print density equal to the density of this particular reference patch.

In step 170, these printer code values, which would produce print densities equal to the patches of the reference patch, are fitted to a smoothed curve. The curve relates the input digital image codes values (for example the code values from the input digital image to be printed) to the output printer code values (for example the code values provided to the printer). This curve compensates for the characteristics of the printer and print media, and provides a preferred system tone scale, as described in commonly-assigned US-A-5,913,014, and in "Some simple techniques for improving the print quality of digital images from Kodak electronic cameras" by Gilman, et. al., published in IS&T's NIP12: International conference on Digital Printing Technologies. For example, the appropriate input image code values and printer output code values for the 6 reference patches, for a particular media can be:

| Patch | Image Input Code Value | Printer Output Code Value |
|---|---|---|
| 1 | 214 | 252 |
| 2 | 187 | 234 |
| 3 | 143 | 190 |
| 4 | 99 | 124 |
| 5 | 64 | 77 |
| 6 | 40 | 48 |

FIG. 4 is a curve depicting an example smoothed printer correction curveshape determined using the process of FIG. 2. The curve passes through the data points listed above, and can use any of the well-known methods for fitting a curve through a group of data points. The curve provides a mapping from each input code value (for example 0 to 255) of the input image to the output code values sent to the printer that provide the desired density values, based on the scanner values of the test print that best match the scanner values of the reference patches.

In step 180, this smoothed curve is used to provide a printer calibration file, for example a single-channel printer calibration lookup table. This table can be a 256 byte table, with each entry providing the output code value for sequential input code values. Thus, byte 180 of the table provides the output code value for input code value 179, that is it provides the printer code value that will produce a print density of 0.140.

In step 190, the lookup table for the particular media is stored, and used when the user prints digital images onto that same media. The process described for steps 100 to 190 can be repeated for any other types of media the user wishes to use.

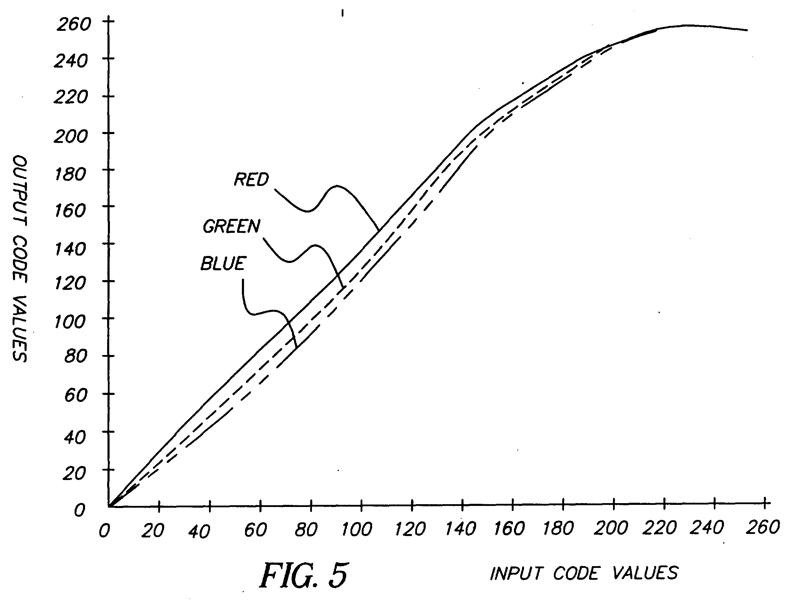

The lookup table produced using the curveshape depicted in FIG. 4 is determined using the luminance values from the color scanner 58, and is applied to all three color planes of the RGB image. Therefore, it modifies the tone reproduction of a print produced by printer 58, but it does not modify the color balance. To correct for color balance differences (for example color shifts) for a particular printer and media combination, three different lookup tables can be produced by determining (in steps 150 and 160) the red, green, and blue scanner code values of each reference patch, and determining the appropriate printer red, green and blue code values that can provide these same RBG scanned values. Three smoothed curves and three lookup tables, one for each of the red, green, and blue color image planes, are then produced in steps 170 and 180. An example of smoothed curves for the RGB planes is depicted in FIG. 5.

These single lookup table depicted in FIG. 4 and the three lookup tables depicted in FIG. 5 are alternate forms of printer calibration files. Other types of printer calibration files are possible. For example, mathematical functions or sparse data points that define the curves show in FIG 4 or FIG 5, or three-dimensional lookup tables, could instead be stored and utilized in providing the output adjustment of the printer 58 for a particular media.

In step 200, corrected hardcopy prints 64 are produced by the printer using the appropriate printer calibration lookup table for the particular media type selected by the user.

### PARTS LIST

- 18: compact disc
- 24: reference strip
- 32: removable memory card
- 40: host computer
- 44: CD-ROM drive
- 46: floppy disc drive
- 48: memory card reader
- 50: CPU
- 52: display monitor\screen
- 54: keyboard
- 55: mouse
- 56: hard drive
- 58: local printer
- 60: floppy disc
- 62: scanner
- 64: hard copy print
- 80: test print
- 82: test patches
- 84: reference patches
- 86: text identifier
- 88: bar code
- 90: alignment features
- 100: select printer calibration
- 110: select media type
- 120: produce test print
- 130: attach reference strip
- 140: scan print
- 150: determine scanner values
- 160: determine printer code values
- 170: fit curve
- 180: provide calibration table
- 190: store / recall lookup table
- 200: produce corrected prints

## Claims

1. A method for providing information usable for adjusting the output of a digital printer, comprising the steps of:
(a) providing a plurality of known code values to the digital printer which produces a test print including a plurality of test patches of density;
(b) providing a plurality of reference patches each having an aim density;
(c) scanning both the test patches and the reference patches to produce code values of both the test patches and the reference patches; and
(d) comparing the code values of the scanned test patches and the reference patches to determine the correspondence between the test patches and the reference patches to provide information adapted to be used for digital printer output adjustment.

2. The method of claim 1 including interpolating between the test patches when the correspondence between test patches and the reference patches is not an exact match.

3. The method of claim 1 wherein the number of reference patches is less than the number of test patches.

4. The method of claim 1 where the test patches are printed on a test print, the reference patches are formed on a reference strip that is smaller than the test print, and on the reference strip is placed on the test print prior to scanning.

5. The method of claim 1 further including simultaneously scanning the test patches and the reference patches.

6. A method for adjusting the output of a digital printer, comprising the steps of:
(a) providing a plurality of known code values to the digital printer which causes the digital printer to produce a plurality of test patches;
(b) providing a plurality of reference patches each having an aim density;
(c) scanning both the test patches and the reference patches to produce code values of both the test patches and the reference patches;
(d) comparing the code values of the scanned test patches and the reference patches to determine the correspondence between the test patches and to construct a printer calibration file; and
(e) adjusting the digital printer in accordance with the printer calibration file.

7. The method of claim 6 where the test patches are printed on a test print which includes an identifier and further including the step of examining the scanned identifier to determine if a correct test print has been scanned.

8. A computer storage product for use in adjusting the output of a digital printer using a plurality of reference patches having known densities comprising a computer readable storage medium having a computer program stored thereon, for performing the steps of:
(a) providing a plurality of known code values to the digital printer for produces producing a test print including a plurality of test patches; and
(b) comparing the code values of scanned test patches and scanned reference patches to determine correspondence between at least some of the test patches and the reference patches to information adapted to be used for adjusting the output of the digital printer.

9. A method for adjusting the output of a digital printer to produce improved prints, comprising the steps of:
(a) providing a plurality of known code values to the digital printer which causes the digital printer to produce a plurality of test patches on the print media;
(b) providing a plurality of reference patches each having an aim density;
(c) scanning both the test patches and the reference patches to produce code values of both the test patches and the reference patches;
(d) using the code values of the scanned test patches and the reference patches to produce a printer calibration file which modifies the code values provided to the digital printer; and
(e) using the printer calibration file to provide improved prints.
